# EUROPEAN PATENT APPLICATION

(11) **EP 2 578 470 A1**
(43) Date of publication of application: **10.04.2013**
(21) Application number: 13150097.7
(22) Date of filing: 19.09.2011
(51) Int. Cl.: B62D 5/04, F16H 55/24

(54) **Motor-driven power steering apparatus**

(30) Priority: 24.02.2011 JP 2011038942; 25.02.2011 JP 2011040873
(62) Divisional of application: 11181838.1
(71) Applicant: Showa Corporation, Gyoda-shi, Saitama (JP)
(72) Inventor: Sekikawa, Shinsuke, Haga-gun, Tochigi (JP)
(74) Representative: Jenkins, Peter David

(57) **Abstract**

In a motor-driven power steering apparatus (10, 310), a guided surface (71A, 101A, 371A) is provided in an outer periphery of a bearing case (71, 101, 201, 371) which retains a bearing (61, 361) of a worm gear (40, 340), and a gear housing (11, 311) is provided with a guide member (72, 102, 372) having a guide surface (72A, 102A, 372A) which comes into contact with the guided surface (71A, 101A, 371A) of the bearing case (71, 101, 201, 371) so as to guide a motion of the bearing case (71, 101, 201, 371) in an energizing direction of the bearing (61, 361).

## Description

The present invention relates to a motor-driven power steering apparatus.

In a motor-driven power steering apparatus, a pinion shaft which is connected to a steering shaft via a torsion bar is pivoted to a gear housing. A rack shaft which engages with the pinion shaft is supported to the gear housing so as to be movable linearly. A worm gear which is connected to a drive shaft of an electric motor is pivoted to the gear housing, and a worm wheel which is fixed to an intermediate portion of the pinion shaft so as to engage with the worm gear is pivoted to the gear housing. The electric motor is structured so as to apply a steering assist torque corresponding to a steering torque which a driver applies to the steering shaft, to the rack shaft via an engagement between the worm gear and the worm wheel, and an engagement between the pinion shaft and the rack shaft.

In the motor-driven power steering apparatus mentioned above, it is necessary to easily set a center distance between the worm gear and the worm wheel without being affected by a dimensional error of the parts such as the worm gear, at a time of assembling, and also to easily regulate the center distance therebetween when the engagement between the worm gear and the worm wheel deteriorates with age after assembling, thereby removing a backlash thereof.

A motor-driven power steering apparatus described in Japanese Patent No. 3646205 (Patent Document 1) and Japanese Patent Application Laid-Open No. 2010-167904 (Patent Document 2) is is provided with an energizing means energizing a bearing which supports a leading end shaft of a worm gear in a radial direction, in such a manner as to apply a preload to an engaged portion between the worm gear and the worm wheel. It regulates a center distance between the worm gear and the worm wheel with an energizing force of the energizing means, thereby removing the backlash thereof.
(A) In the motor-driven power steering apparatus described in Patent Document 1, a gear housing is provided with a resin guide member which is provided around a hearing supporting a leading end shaft of a worm gear, and an outer periphery of the bearing is slidably supported by a guide surface which is provided in the guide member, thereby guiding a motion of the bearing in a radial direction corresponding to an energizing direction of the energizing means. In accordance with this, the bearing is prevented from moving in a direction which intersects the radial direction due to an engagement reaction force between the worm gear and the worm wheel, thereby preventing generation of an engagement defect of the engaged portion and a torque unevenness.

In the motor-driven power steering apparatus described in Patent Document 1, since a guide surface of a guide member which guides the motion of the bearing supporting the leading end shaft of the worm gear consists of a flat surface, and an outer periphery of the bearing which comes into contact with the guide surface forms a circular arc surface, both the elements come into line contact with each other.

On the other hand, the engagement reaction force between the worm gear and the worm wheel runs to an axial direction of the worm wheel, that is, a direction which is orthogonal to the guide surface of the guide member. In accordance with this, a surface pressure of the linear contact is larger in the contact portion between the guide surface of the guide member and the outer periphery of the bearing. The guide surface of the resin guide member deforms, and there is a risk that a guide function is deteriorated.

An object of the present invention is to stably guide the motion of a bearing of a drive gear in a radial direction at a time of energizing the bearing in the radial direction so as to remove or minimize backlash between the drive gear and a driven gear, in a motor-driven power steering apparatus.
(B) Further, the energizing means described in Patent Document 2 is as follows. It is structured such that a base end shaft on a side of an electric motor in a worm gear is supported to a reference bearing which is fixed to a gear housing. A leading end shaft in an opposite side to the electric motor in the worm gear is supported to a leading end bearing which is fixed to the gear housing via a collar. The collar is inserted so as to be slidable in an axial direction with respect to the leading end bearing. A snapping body which energizes the collar toward a side of the worm gear is interposed between a flange portion which is provided in a side protruding toward the side of the worm gear from the leading end bearing and an end surface of the leading end bearing. The collar is provided with an expansion shaped inner diameter portion which expands toward the side of the worm gear, and a leading end of a leading end shaft of the worm gear is supported to the expansion shaped inner diameter portion of the collar. In accordance with this, the worm gear is always pressed and supported by the leading end of the leading end shaft of the worm gear by a part in a peripheral direction of the expansion shaped inner diameter portion of the collar which is energized by the snapping body, and is always energized to a side which comes into close contact with a center shaft of the worm wheel.

In the motor-driven power steering apparatus described in Patent Document 2, the worm gear is energized to the side of the worm wheel, by pressing a conical surface of the expansion shaped inner diameter portion of the collar to a conical surface in the leading end of the leading end shaft of the worm gear.

However, the engagement reaction force between the worm gear and the worm wheel runs to the axial direction of the worm gear without being limited to the radial direction of the worm gear. Accordingly, the worm gear tends to move also in the axial direction due to the engagement reaction force. However, the conical surfaces mentioned above of the worm gear and the collar cannot hold back the motion in the axial direction of the worm gear. Accordingly, an engagement defect is is generated in the engaged portion between the worm gear and the worm wheel, thereby causing an abnormal abrasion of tooth of the worm gear and the worm wheel, an increase of a backlash and generation of a tooth beating sound.

An object of the present invention is to make a drive gear move only in a radial direction at a time of energizing the drive gear in the radial direction so as to remove or minimize backlash between the drive gear and a driven gear, in a motor-driven power steering apparatus.

In one embodiment of the present invention, there is provided a motor-driven power steering apparatus comprising a drive gear driven by an electric motor, the drive gear being pivoted to a gear housing. A driven gear engages with the drive gear so as to be connected to a steering shaft, the driven gear being pivoted to the gear housing. An energizing means energizes a bearing of the drive gear in a radial direction in such a manner as to apply a preload to an engaged portion between the drive gear and the driven gear. A guided surface is provided in an outer periphery of a bearing case retaining the bearing of the drive gear, and the gear housing is provided with a guide member having a guide surface which comes into contact with the guided surface of the bearing case so as to guide a motion of the bearing case an energizing direction of the bearing.

In another embodiment of the present invention, there is provides a motor-driven power steering apparatus, wherein the guide member is provided with a thrust support surface which comes into contact with an end surface in an axle direction (axial direction) of the bearing case so as to guide the motion of the bearing case.

In another embodiment of the present invention, there is provides a motor-driven power steering apparatus, wherein the bearing case is made of resin.

In another embodiment of the present invention, there is provided a motor-driven power steering apparatus, wherein the guide member is formed as a separate body from the gear housing, and is attached to the gear housing.

In another embodiment of the present invention, there is provides a motor-driven power steering apparatus, wherein the energizing means is provided in the guide member.

In another embodiment of the present invention, there is provided a motor-driven power steering apparatus comprising a drive gear driven by an electric motor, the drive gear being pivoted to a gear housing. A driven gear engages with the drive gear so as to be connected to a steering shaft, the driven gear being pivoted to the gear housing. An energizing means energizes the drive gear in a radial direction in such a manner as to apply a preload to an engaged portion between the drive gear and the driven gear. The energizing means is structured such that a spring case is positioned and immobilized around a shaft end of the drive gear which is pivoted to the gear housing. A ring portion of a leaf spring is wound around the shaft end of the drive gear, and a leg piece extending in a radial direction of the ring portion of the leaf spring is set to a snapping previously deformed state so as to be attached to an attaching portion of the spring case.

In another embodiment of the present invention, there is provides a motor-driven power steering apparatus, wherein the spring case is provided with a positioning convex portion in an outer periphery, and the positioning convex portion is capable of being locked and attached to a slit which is provided in the gear housing.

In another embodiment of the present invention, there is provides a motor-driven power steering apparatus, wherein the leaf spring consists of a C-shaped ring portion, and C-shaped both end leg pieces which are connected to both ends of the ring portion. Both end leg pieces are attached respectively to both side attaching portions forming a pair in the spring case.

In another embodiment of the present invention, there is provided a motor-driven power steering apparatus, wherein the ring portion of the leaf spring is wound around a bush which is provided in an outer periphery of the shaft end of the drive gear.

In another embodiment of the present invention, there is provides a motor-driven power steering apparatus, wherein the gear housing is provided with a guide member which has a bearing case retaining a bearing of the drive gear, has a guided surface in an outer periphery of the bearing case, and is provided with a guide surface coming into contact with the guided surface of the bearing case so as to guide a motion of the bearing case in an energizing direction of the bearing.

In accordance with the present embodiment, the following operations and effects can be achieved.
(a) The guided surface is in the outer periphery of the bearing case which retains the bearing of the drive gear, and the gear housing is provided with the guide member having the guide surface which comes into contact with the guided surface of the bearing case and guides the motion of the bearing case in the energizing direction of the bearing.

It is possible to correctly guide the bearing of the drive gear which is energized by the energizing means, in the radial direction corresponding to the energizing direction by the guide member, and it is also possible to prevent an engagement defect of the engaged portion of the drive gear and the driven gear and torque unevenness from being generated.

At this time, the guide surface of the guide member which guides the motion in the radial direction (the energizing direction of the energizing means) of the case retaining the bearing of the drive gear consists of the flat surface, and the guided surface of the bearing case which comes into contact with the guide surface also consists of the flat surface. Both the elements come into surface contact with each other. Surface pressure thereof becomes smaller. It is possible to avoid deformation of the guide surface and the guided surface, and it is possible to stably maintain a guiding function thereof.
(b) The guide member is provided with the thrust support surface which comes into contact with the end surface in the axle direction of the bearing case so as to guide the motion of the bearing case. The end surface in the axle direction of the bearing case which retains the bearing of the drive gear is guided in the radial direction on the thrust support surface such that the end surface comes into contact with the thrust support surface of the guide member so as to be supported in the axle direction. It is possible to more smoothly guide the motion in the radial direction of the bearing case which retains the bearing of the drive gear.
(c) In the case where the bearing case is made of resin, it is possible to avoid metal contact between the bearing which is made of metal and the guide member which is of metal, and it is possible to prevent an uncomfortable abnormal noise from being generated. It is possible to quietly bring the guided surface of the bearing case made of resin into slidable contact by means of the guide surface of the guide member made of metal so as to guide.
(d) The guide member is formed as the separated body from the gear housing, and is attached to the gear housing. It is possible to improve an assembling property by preparing the bearing support unit in which the bearing and the bearing case are previously assembled in the guide member, and assembling the bearing support unit in the gear housing.
(e) It is possible to further improve an assembling property by preparing the bearing support unit in which the energizing means is also previously assembled in the guide member.
(f) The spring case is positioned and immobilized around the shaft end of the drive gear which is pivoted to the gear housing. The ring portion of the leaf spring constituting the energizing means is wound around the shaft end of the drive gear, and the leg piece extending in the radial direction from the ring portion of the leaf spring is set to the snapping previously deformed state so as to be attached to the attaching portion of the spring case. In accordance with this, the leaf spring exerts the snapping force only in the radial direction of the ring portion which is wound around the shaft end of the drive gear, in other words, the radial direction of the drive gear. Accordingly, even if the engagement reaction force of the drive gear and the driven gear exerts in the axial direction of the drive gear in addition to the radial of the drive gear, the leaf spring which always snaps the drive gear only in the radial direction does not allow the motion in the axial direction of the drive gear.

Accordingly, the drive gear moves only in the radial direction, does not generate an engagement defect with the driven gear, and can prevent an abnormal abrasion of the tooth of the drive gear and the driven gear, and an increase of friction. Thereby, it is possible to prevent generation of a tooth beating sound.
(g) The energizing means is assembled in the gear housing in the state of the preassembled body in which the leaf spring is assembled in the spring case, and it is possible to improve an assembling property.
(h) The spring case is provided with the positioning convex portion in the outer periphery, and the positioning convex portion is locked and attached to the slit which is provided in the gear housing. It is possible to directly and correctly align the direction of the snapping force which the leaf spring in the spring case exerts, with the radial direction of the drive gear, by locking and attaching the positioning convex of the spring case to the slit of the gear housing, so as to assemble based on a positional relationship between the positioning convex portion which is provided in the spring case and the attaching portion for the leaf spring.
(i) The leaf spring consists of the C-shaped ring portion, and the C-shaped both end leg pieces which are connected to both ends of the ring portion. Both end leg pieces are attached respectively to both side attaching portions forming a pair of the spring case. In accordance with this, it is possible to improve a winding property around the shaft end of the drive gear of the leaf spring, and an attaching property to the spring case of the leaf spring.
(j) The leaf spring can exert the snapping force in the radial direction without applying any friction to the shaft end of the drive gear, by winding the ring portion of the leaf spring around the bush which is provided in the outer periphery of the shaft end of the drive gear.
(k) The housing is provided with the guide member which has the bearing case retaining the bearing of the drive gear, has the guided surface in the outer periphery of the bearing case, and is provided with the guide surface coming into contact with the guided surface of the bearing case so as to guide the motion of the bearing case in the energizing direction of the bearing. It is possible to correctly guide the bearing of the drive gear which is energized by the energizing means in the radial direction corresponding to the energizing direction by the guide member, and it is possible to prevent an engagement defect of the engaged portion between the drive gear and the driven gear and a torque unevenness from being generated.

At this time, the guide surface of the guide member which guides the motion in the radial (the energizing direction of the energizing means) of the bearing case retaining the bearing of the drive gear consists of the flat surface, and the guided surface of the case which comes into contact the guide surface also consists of the flat surface. Both elements come into surface contact with each other, the surface pressure thereof becomes smaller, it is possible avoid of the guide surface and the guided surface, it is possible to stably maintain the guiding function.

The invention will be more fully understood from the detailed description given below and from the accompanying drawings which should not be taken to be a limitation on the invention, but are for explanation an understanding only.
The drawings:
Fig. 1 is a front elevational view showing a motor-driven power steering apparatus a partly broken manner;
FIG. 2 is a cross-sectional view along a line II-II in FIG. 1;
FIG. 3 is a cross-sectional view along a line III-III in FIG. 2;
FIG. 4 is a cross-sectional view showing a bearing support structure in FIG. 3 in an enlarged manner;
FIG. 5 is a perspective view showing a gear housing in FIG. 3;
FIG. 6 is a perspective view showing an assembled state of a bearing support structure;
FIG. 7 is a perspective view showing a bearing support unit;
FIG. 8 is a perspective view showing a modified example of the bearing support unit;
FIGS. 9A to 9C are perspective views showing a modified example of the bearing support unit;
FIG. 10 is a perspective view showing a gear housing in which the bearing support unit in FIG. 9C is assembled;
FIG. 11 is a front elevational view showing a motor-driven power steering apparatus in a partly broken manner;
FIG. 12 is a cross-sectional view along a line XII-XII in FIG. 11;.
FIG. 13 is a cross-sectional view along a line XIII-XIII in FIG. 12;
FIG, 14 is a cross-sectional view showing a bearing support structure in FIG. 13 in an enlarged manner;
FIG. 15 is a perspective view showing an assembled state of a bearing support structure;
FIG. 16 is a perspective view showing the bearing support structure in an exploded manner; and
FIGS. 17A to 17C are perspective views showing a hearing support unit.

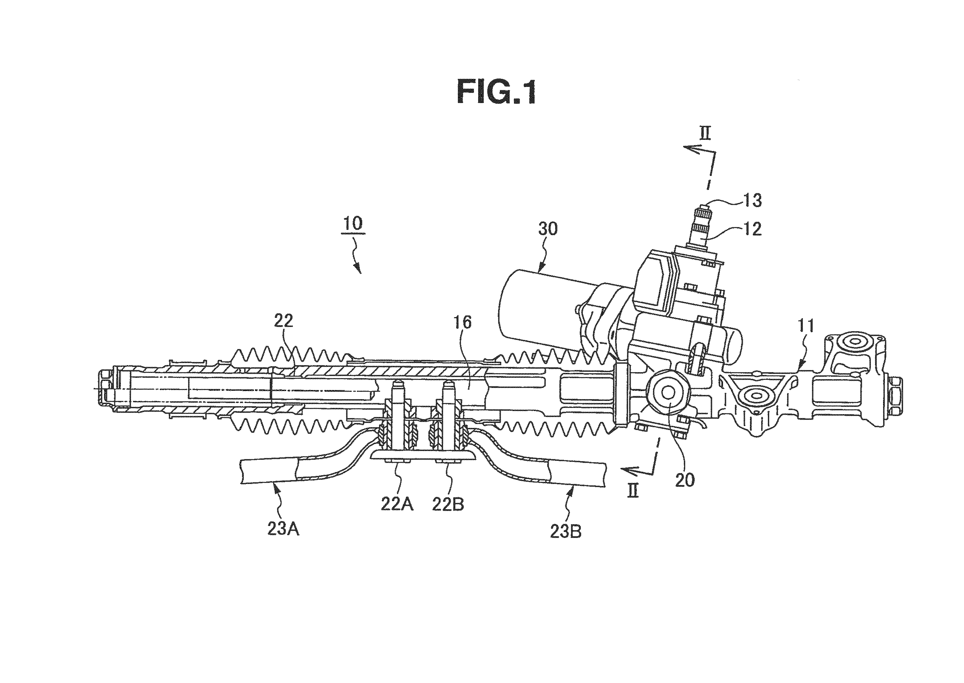

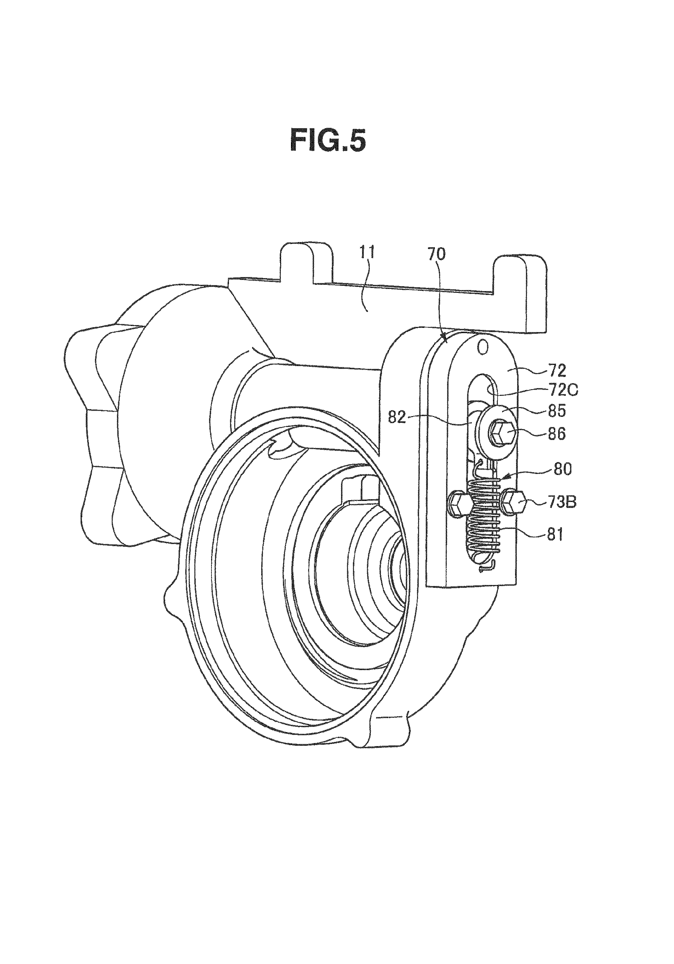

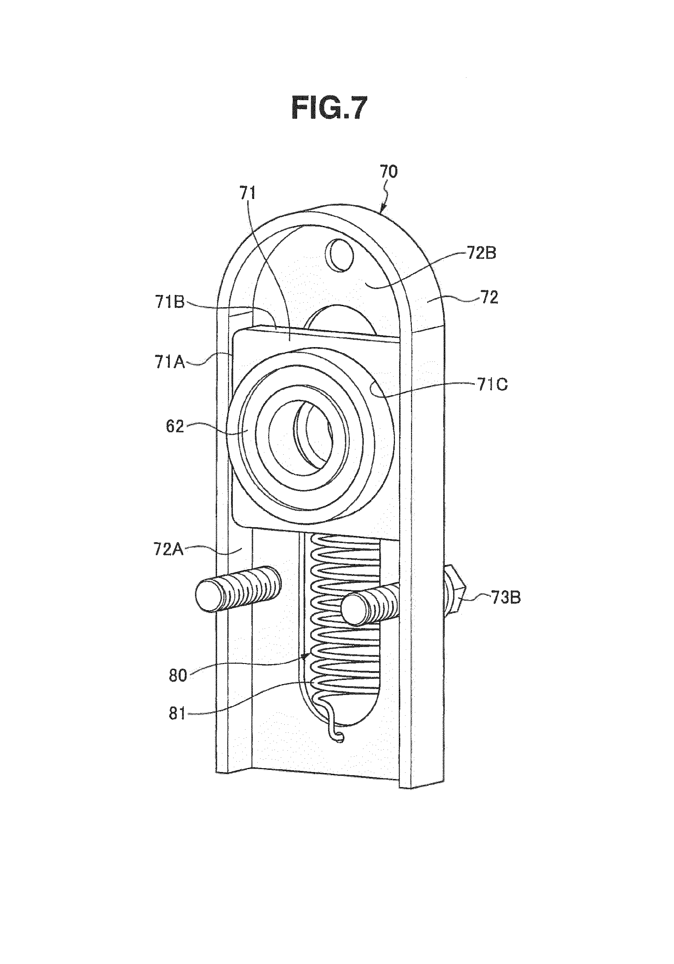

### (First Embodiment) (FIGS. 1 to 10)

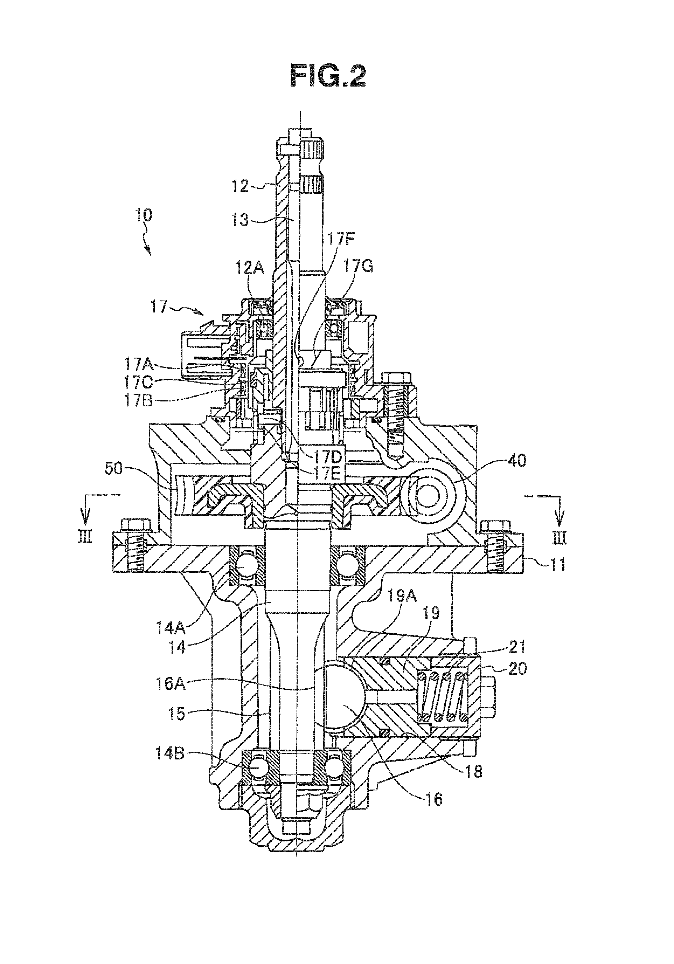

A motor-driven power steering apparatus 10 has a gear housing 11 which is fixed to a vehicle body frame or the like by a bracket (not shown), as shown in FIGS. 1 and 2. Further, a pinon shaft (a steering shaft) 14 is connected coaxially to a steering shaft 12 to which a steering wheel is connected, via a torsion bar 13. Aa pinion 15 is provided in the pinion shaft 14, and a rack shaft 16 which is provided with a rack 16A engaging with the pinion 15 is supported to the gear housing 11 so as to be linearly movable right and left. A steering torque detecting apparatus 17 is provided between the steering shaft 12 and the pinion shaft 14. In this case, the steering shaft 12 and the pinion shaft 14 are supported to the gear housing 11 via bearings 12A, 14A and 14B.

The steering torque detecting apparatus 17 is provided, in the gear housing 11, with two detecting coils 17A and 17B which surround a cylindrical core 17C engaging with the steering shaft 12 and the pinion shaft 14, as shown in FIG. 2. The core 17C is provided with a vertical groove 17E which engages with a guide pin 17D of the pinion shaft 14 so as to be made movable only in an axial direction, and is provided with a spiral groove 17G which engages with a slider pin 17F of the steering shaft 12. In accordance with this, if a steering torque which a driver applies to a steering wheel is applied to the steering shaft 12, and a relative displacement in a rotating direction is generated between the steering shaft 12 and the the pinion shaft 14, due to an elastic torsional deformation of the torsion bar 13, a displacement in the rotating direction of the steering shaft 12 and the pinion shaft 14 displaces the core 17C in an axial direction, so that an inductance of the detecting coils 17A and 17B caused by a magnetic change around the detecting coils 17A and 17B due to the displacement of the core 17C changes. In other words, if the core 17C moves to a side of the steering shaft 12, the inductance of the detecting coil 17A to which the core 17C comes close is increased, and the inductance of the detecting coil 17B from which the core 17C comes away is decreased, so that it is possible to detect the steering torque based on the change of the inductance.

A rack guide 19 is embedded in a cylinder portion 18 which is provided in a portion opposed to the pinion 15 while holding one end of the rack shaft 16 therebetween within the gear housing 11, as shown in FIG. 2. The rack guide 19 (a bush 19A) is snapped to a side of the rack shaft 16 by a spring 21 which is supported on its back face by a cap 20 attached to the cylinder portion 18, presses a rack 16A of the rack shaft 16 to the pinion 15, and slidably supports one end of the rack shaft 16. In this case, another end side of the rack shaft 16 is supported by a bearing 22. Further, left and right tie rods 23A and 238 are connected to an intermediate portion of the rack shaft 16 by connecting bolts 22A and 22B.

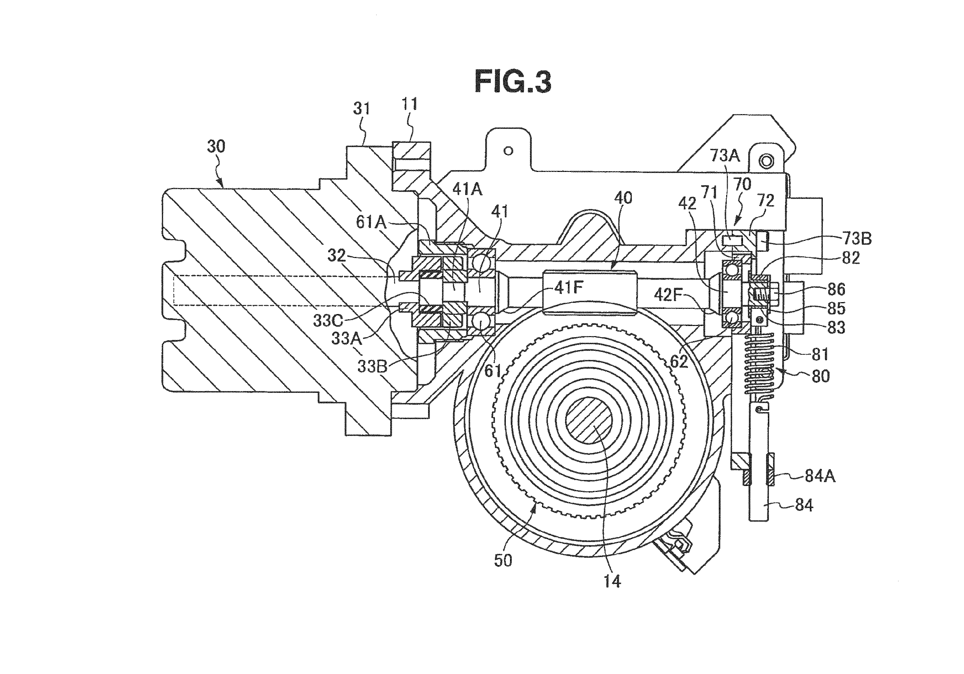

A motor case 31 of the electric motor 30 is attached to the gear housing 11, as shown in FIG. 3. A worm gear 40 serving as a drive gear is connected to a drive shaft 32 of the electric motor 30 via a coupling 33. The coupling 33 is constructed by a drive ring 33A which is connected by spline to the drive shaft 32 of the electric motor 30, a driven ring 33B which is connected by spline to a base end shaft 41 mentioned below of the worm gear 40, and a rubber ring 33C which is interposed between the drive ring 33A and the driven ring 33B in their peripheral directions. In this case, the drive shaft 32 of the electric motor 30 and the drive ring 33A may be pressed into or integrated. Further, the base end shaft 41 of the worm gear 40 and the driven ring 33B may be pressed into or integrated.

The worm gear 40 is supported on its both ends to the gear housing 11 by hearings 61 and 62 mentioned below. The worm gear 40 is engaged with a worm wheel 50 serving as a driven gear, and the worm wheel 50 is fixed to an intermediate portion of the pinion shaft 14 (the steering shaft). The electric motor 30 is driven based on a steering torque detected by the steering torque detecting apparatus 17, and a generated torque of the electric motor 30 is applied as a steering assist torque to the rack shaft 16 via an engagement between the worm gear 40 and the worm wheel 50, and an engagement between the pinion 15 and the rack 16A, and assists a steering torque which a driver applies to the steering shaft 12.

Accordingly, the motor-driven power steering apparatus 10 supports the worm gear 40 with respect to the gear housing 11 as shown in FIG. 3, and removes the backlash of the worm gear 40 and the worm wheel 50.

The base end shaft 41 which is provided in a protruding manner on a side of the electric motor 30 in the worm gear 40 is supported to a reference bearing 61 which is fixed to the gear housing 11. The reference bearing 61 consists of, for example, a ball bearing, and is structured such that an outer ring is fitted to a hole which is provided in the gear housing 11. One end surface of the outer ring comes into contact with and is supported to a step surface which is provided on one side of the hole, and another end surface of the outer ring is pressed and supported by a nut 61A which is threadably attached to another side of the hole. The base end shaft 41 of the worm gear 40 is inserted into an inner ring of the reference bearing 61. A flange portion 41F which is provided close to the worm gear 40 of the base end shaft 41 comes into contact with and is supported to one end surface of the inner ring, and another end surface of the inner ring is pressed and supported by an end surface of the driven ring 33B of the coupling 33 which is connected close to the electric motor 30 of the base end shaft 41. The base end shaft 41 of the worm gear 40 may be fastened to the inner ring of the reference bearing 61 in accordance with press fit or caulking. In accordance with this, the base end shaft 41 of the worm gear 40 is fixed to the inner ring of the reference bearing 61, and the leading end 41A of the reference shaft 41 is connected to the drive shaft 32 of the electric motor 30 via the coupling 33 mentioned above. A load in an axial direction which acts on the worm gear 40 is supported by the reference bearing 61.

In this case, the reference bearing 61 consists of an angular ball bearing, and slidably supports a center axis (the base end shaft 41 and a leading end shaft 42 mentioned below) of the worm gear 40 with respect to the gear housing 11.

The leading end shaft 42 (which is coaxial with the base end shaft 41) which is provided in a protruding manner in an opposite side to the electric motor 30 in the worm gear 40 is supported by a leading end bearing 62 which is embedded in a bearing support unit 70 fixed to the gear housing 11. Further, the leading end bearing 62 supporting the leading end shaft 42 of the worm gear 40 is energized in a radial direction by an energizing means 80 which is embedded in the bearing support unit 70, thereby removing or minimizing the backlash of the worm gear 40 and the worm wheel 50.

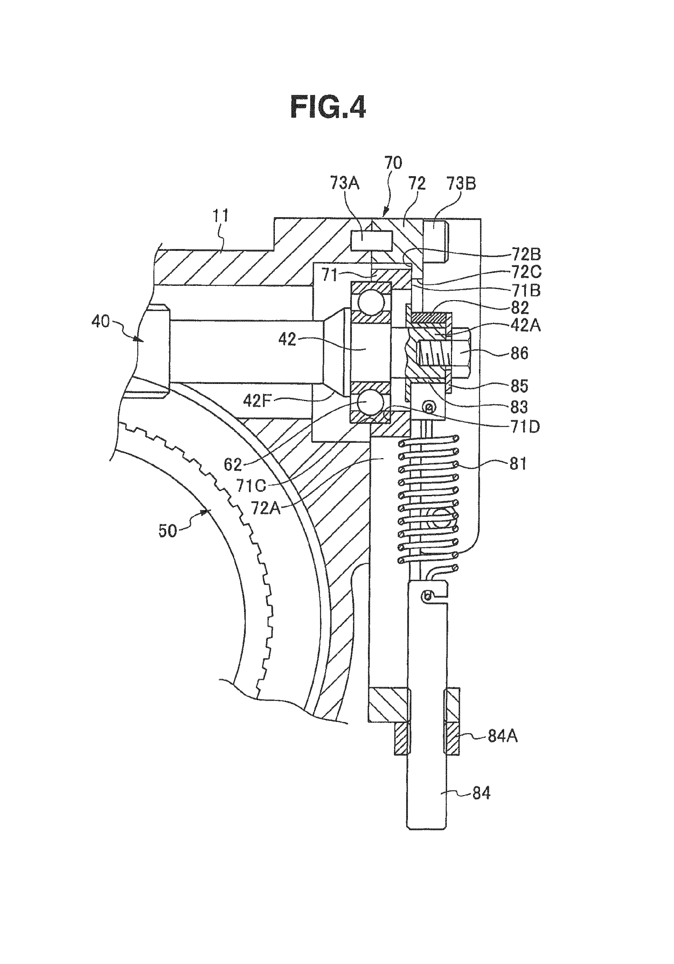

The bearing support unit 70 is structured, as shown in FIGS. 4 to 7, such that a guided surface 71A is provided in an outer periphery of a bearing case 71 retaining the leading end bearing 62 of the worm gear 40, and the gear housing 11 is provided with a guide member 72 with which the guided surface 71A of the bearing case 71 comes into slidable contact and which is provided with a guide surface 72A guiding a motion of the bearing case 71 in an energizing direction by an energizing means 80 of the leading end bearing 62.

In the present embodiment, the bearing case 71 is formed as an annular molded body which is made of a resin, is provided with a step hole 71C which charges the outer ring of the leading end bearing 62 without any gap so as to retain, and forms two flat surfaces which are formed as a rectangular outer shape and are in parallel to each other as the guided surface 71A.

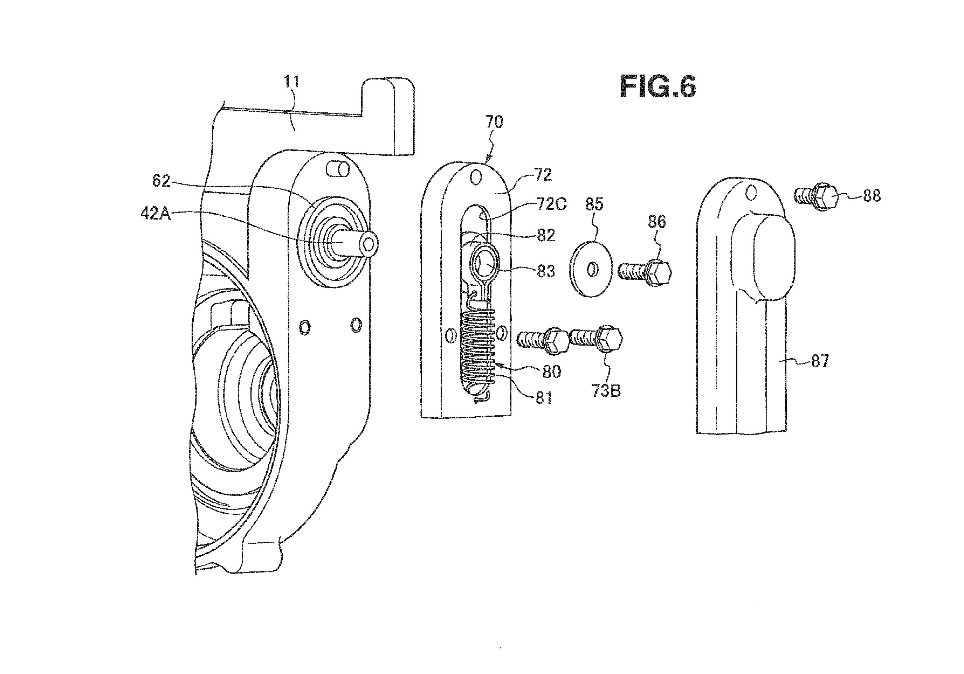

The guide member 72 is formed as a separate body from the gear housing 11. An outer peripheral portion of a frame body of the guide member 72 is positioned to the gear housing 11 by a knock pin 73A, and the guide member 72 is attached by a bolt 73B (FIG. 6). The guide member 72 is provided in a rising manner with two guide rail shaped guide surfaces 72A which are in parallel to each other in both side edges of the frame body, and forms a flat surface within the frame body in which the guide surfaces 72A on both sides rise as a thrust support surface 72B. The guide surfaces 72A in both sides make the guided surface 71A of the bearing case 71 come into slidable contact therewith, and guide the leading end hearing 62 retained by the bearing case 71 in an energizing direction by the energizing means 80. The thrust support surface 72B comes into slidable contact with an end surface 71B in an axle direction which is orthogonal to two guided surfaces 71A of the bearing case 71 so as to guide the motion mentioned above of the bearing case 71.

In this case, the leading end bearing 62 consists of, for example, a ball bearing. An outer ring of the leading end bearing 62 is fitted to the step hole 71C of the bearing case 71 which comes into contact with the thrust support surface 72B of the guide member 72 fixed to the gear housing 11 in the axle direction as mentioned above. One end surface of the outer ring comes into contact with and supported to the step surface 71D which is provided in the step hole 71C of the bearing case 71. The leading end shaft 42 of the worm gear 40 is inserted into the inner ring of the leading end bearing 62. A flange portion 42F which is provided close to the worm gear 40 of the leading end shaft 40 comes into contact with and is supported to one end surface of the inner ring. A leading end 42A of the leading end shaft 42 is protruded outward from the step hole 71C of the bearing case 71 to which the leading end bearing 62 is retained via a center window portion 72C of the frame body of the guide member 72. A load in an axial direction which acts on the worm gear 40 is supported by the leading end bearing 62.

The energizing means 80 has a coil spring 81 which is connected to a lower portion of the frame body of the guide member 72, as shown in FIGS. 4 to 7. A bush 83 which is provided in an inner periphery of an attaching collar 82 connected to another end of the coil spring 81 is fitted to an outer periphery of the leading end 42A of the leading end shaft 42 of the worm gear 40 which protrudes outward from the center window portion 72C of the frame body of the guide member 72. The leading end beating 62 of the worm gear 40 is energized in a radial direction in such a manner as to apply a preload to the engaged portion between the worm gear 40 and the worm wheel 50, by a snapping force of the coil spring 81.

In this case, as shown in FIGS. 3 and 4, it is possible to regulate the snapping force mentioned above of the coil spring 81, by threadably attaching a spring adjuster 84 to a lower portion of the frame body of the guide member 72, and connecting one end of the coil spring 81 to the spring adjuster 84. Reference symbol 84A denotes a lock nut.

Further, an attaching collar 82 and a bush 83 which are fitted to the leading end 42A of the leading end shaft 42 are prevented from coming off by a washer 85 and a preventing coming-off (retaining) bolt 86 which are provided in an end surface of the leading end 42A. The washer 85 and the bolt 86 may substitute for a stop ring which is locked and attached to the leading end 42A.

The bearing support unlit 70 the energizing means 80 which are provided in the gear housing 11 are covered with respect to an external field by a dust cover 87 and an attaching bolt 88 which are attached to the gear housing 11, as shown in FIG. 6.

In accordance with the present embodiment, the following operations and effects can be achieved.
(a) The guided surface 71A is provided in the outer periphery of the bearing case 71 which retains the leading end bearing 62 of the worm gear 40. The gear horsing 11 is provided with the guide member 72 having a guide surface 72A which comes into contact with the guided surface 71A of the bearing case 71 and guides the motion of the bearing case 71 in the energizing direction of the leading end bearing 62.

It is possible to correctly guide the leading end bearing 62 of the worm gear 40 which is energized by the energizing means 80, in the radial direction corresponding to the energizing direction by the guide member 72, and it is possible to prevent the engagement defect of the engaged portion of the worm gear 40 and the worm wheel 50 and the torque unevenness from being generated.

At this time, the guide surface 72A of the guide member 72 which guides the motion in the radial direction (the energizing direction of the energizing means 80) of the hearing case 71 retaining the leading end bearing 62 of the worm gear 40 consists of the flat surface, and the guided surface 71A of the hearing case 71 which comes into contact with the guide surface 72A also consists of the flat surface. Both the elements come into surface contact with each other, a surface pressure thereof becomes smaller, whereby it is possible to avoid deformation of the guide surface 72A and the guided surface 71A, and it is possible to stably maintain a guiding function thereof.
(b) The guide member 72 is provided with the thrust support surface 72B which comes into contact with the end surface in the axle direction of the bearing case 71 so as to guide the motion of the bearing case 71. The end surface in the axle direction of the bearing case 71 which retains the leading end bearing 62 of the worm gear 40 is guided in the radial direction on the thrust support surface 72B such that the end surface comes into contact with the thrust support surface 72B of the guide member 72 so as to be supported in the axle direction. It is possible to more smoothly guide the motion in the radial direction of the bearing case 71 which retains the leading end bearing 62 of the worm gear 40.
(c) In the case where the bearing case 71 is made of resin, it is possible to avoid metal contact between the leading end beating 62 which is made of metal and the guide member 72 which is made of metal, and it is possible to prevent an uncomfortable abnormal noise from being generated. It is possible to quietly bring the guided surface 71A of the bearing case 71 made of resin into slidable contact by means of the guide surface 72A of the guide member 72 made of metal so as to guide.
(d) The guide member 72 is formed as the separated body from the gear housing 11, and is attached to the gear housing 11. It is possible to improve an assembling property by preparing the bearing support unit 70 in which the leading end bearing 62 and the hearing case 71 are previously assembled in the guide member 72, and assembling the bearing support unit 70 in the gear housing 11.
(e) It is possible to further improve an assembling property by preparing the bearing support unit 70 in which the energizing means 80 is also previously assembled in the guide member 72.

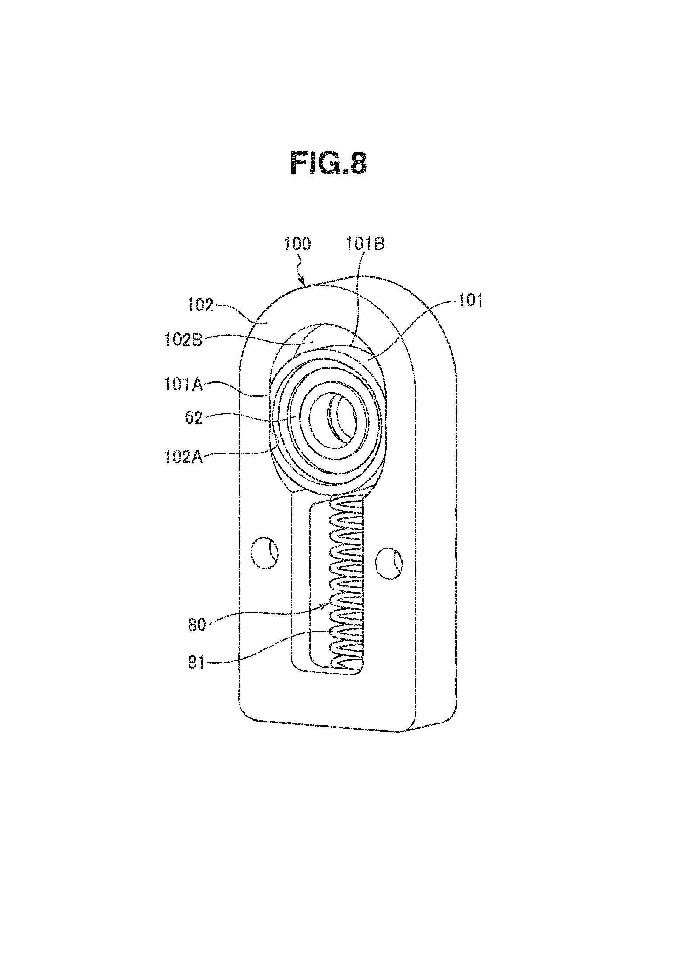

FIG. 8 shows a bearing support unit 100 in accordance with a modified example of the bearing support unit 70 shown in FIGS. 4 to 7. The bearing support unit 100 is different from the bearing support unit 70 in the point of using a bearing case 101 and a guide member 102 which substitute for the bearing case 71 and the guide member 72 of the bearing support unlit 70. The bearing case 101 is structured such that two opposed positions to each other of an outer shape of a circular shape are formed as flat surfaces which are in parallel to each other, and the flat surfaces are formed as a guided surface 101A which substitutes for the guided surface 71A. The guide member 102 is provided with elliptical guide rail portions in both side edges of a frame body. Two flat surfaces which are opposed to and in parallel to each other of the guide rail portion are formed as a guide rail shaped guide surface 102A. The guide member 102 is provided with a thrust support surface 102B which comes into sliable contact with an end surface 101B in an axle direction of the bearing case 101 and guides the bearing case 101, in the same manner as the thrust support surface 72B of the guide member 72.

The bearing support unit 100 has the built-in energizing means 80 energizing the leading end bearing 62 of the worm gear 40 in the radial direction in the same manner as that in the bearing support unit 70.

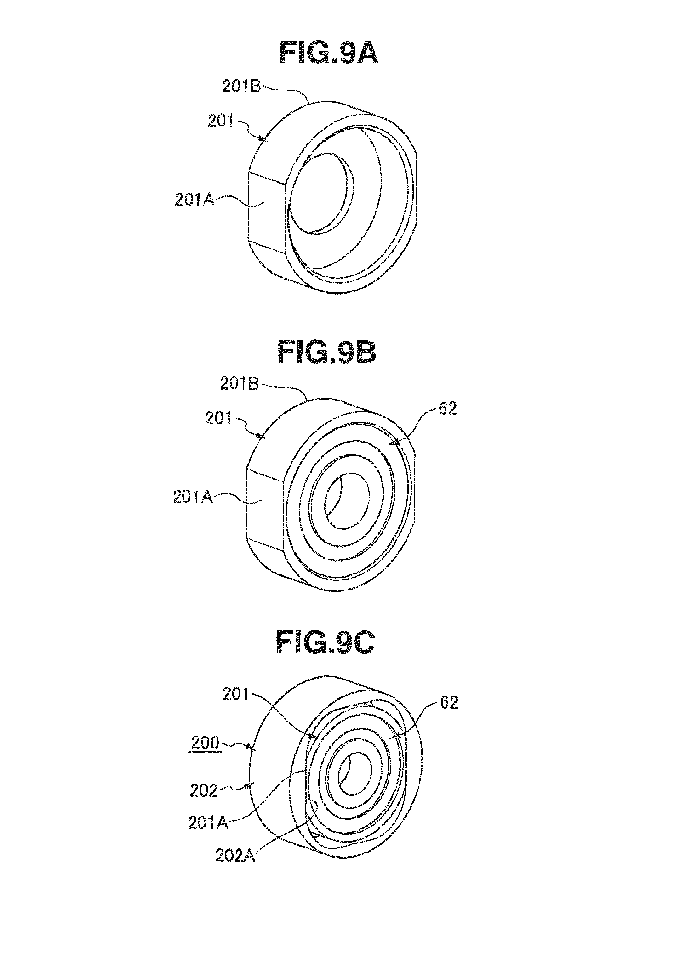

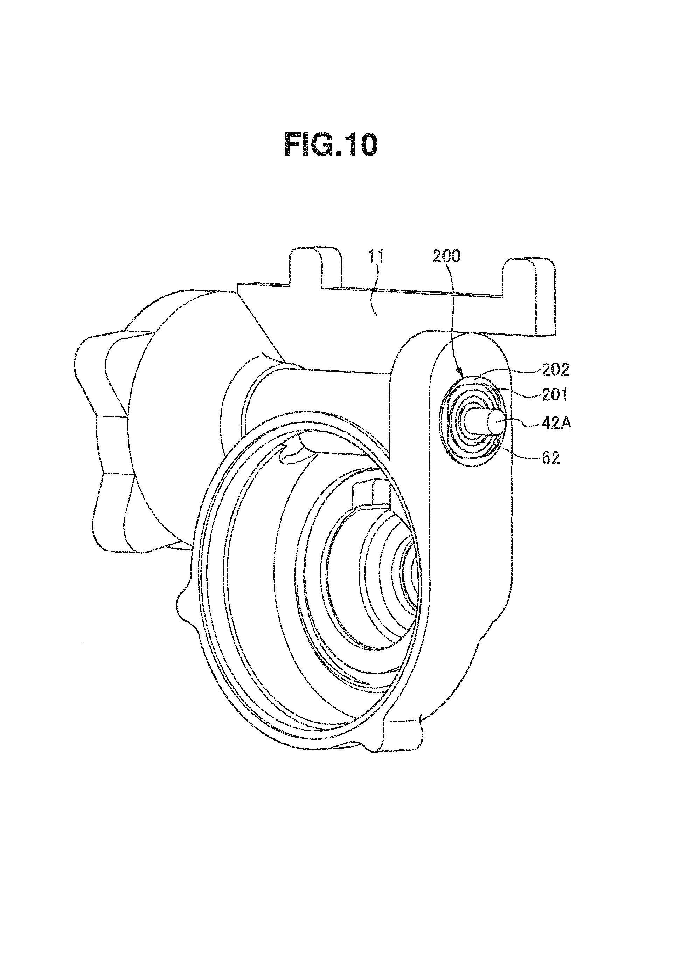

FIGS. 9A to 9C and 10 show a bearing support unit 200 in accordance with a modified example of the bearing support unit 100 shown in FIG. 8. The bearing support unit 200 is different from the bearing support unit 100 in the point of using a guide member 202 which is obtained by deforming the frame body of the guide member 102 of the bearing support unit 100 as an annular frame body. The bearing case 201 of the bearing support unit 200 is the same as the bearing case 101 of the bearing support unit 100, and is provided with a guided surface 201A in the same manner as the guided surface 101A The guide member 202 is 202 is provided with a guide surface 202A which is the same as the guide surface 102A of the guide member 102. The guide member 202 is provided with a thrust support surface 202B (not shown) which comes into slidable contact with an end surface 201B in an axle direction of the bearing case 201 and guides a motion of the bearing case 201, in the same manner as the thrust support surface 102B of the guide member 102.

In this case, in the bearing support unit 200, it does not have the built-in energizing means 80 energizing the leading end bearing 62 of the worm gear 40 in the radial direction. But, the coil spring 81 of the energizing means 80 is provided between the attaching collar 82 which is fitted to the outer periphery of the leading end 42A of the leading end shaft 42 of the worm gear 40 via the bush 83, and the gear housing 11.

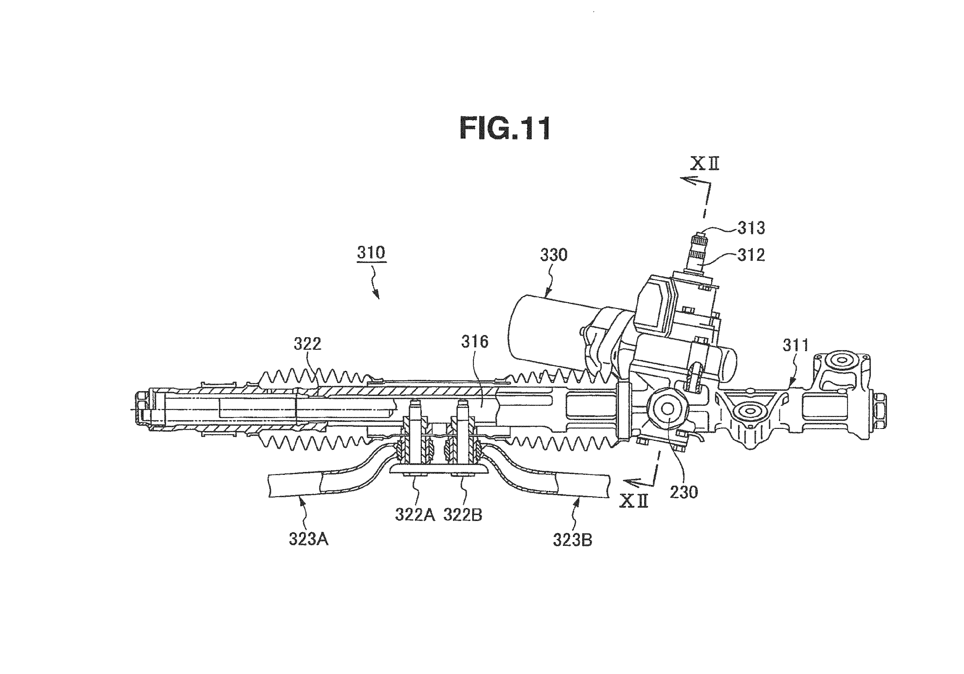

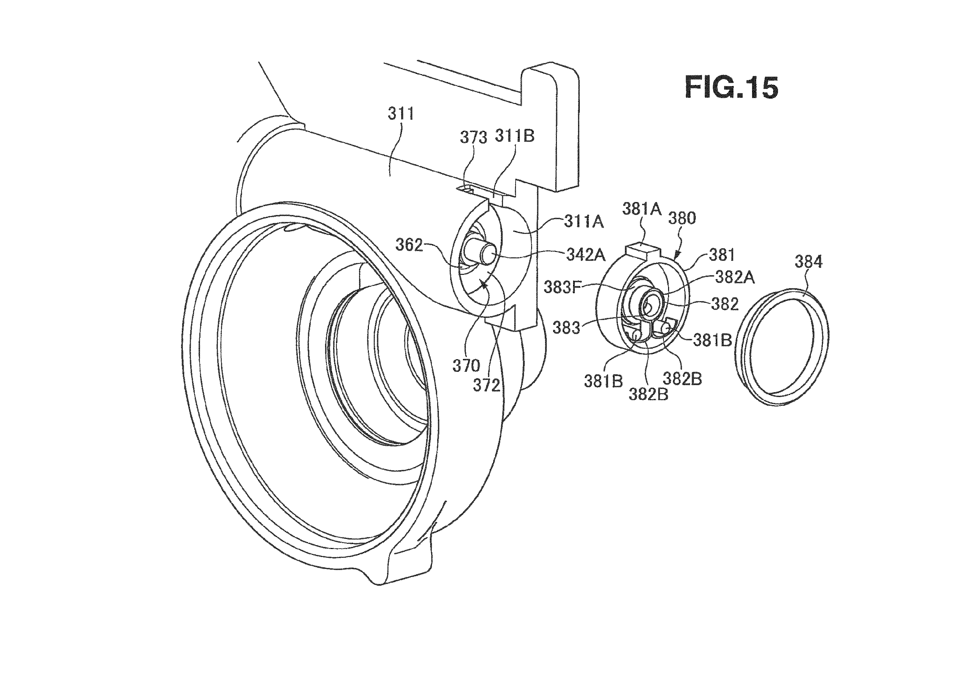

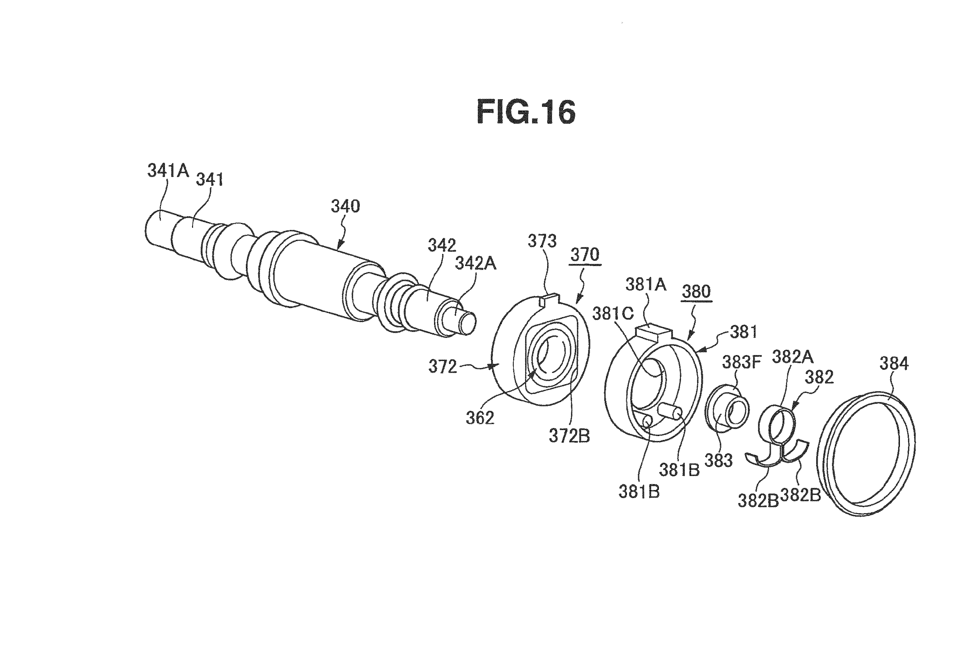

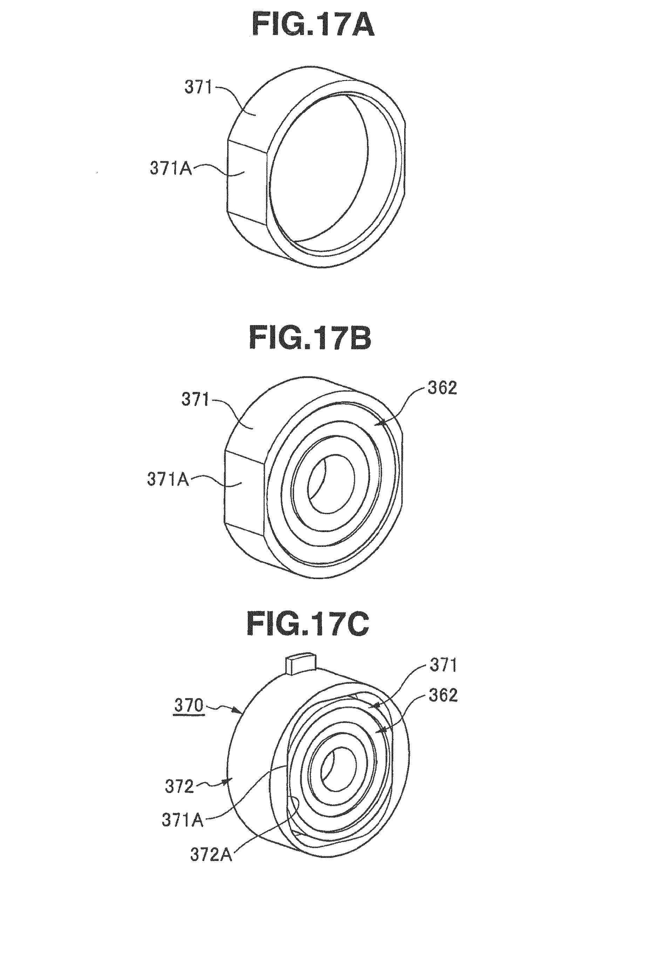

### (Second Embodiment)(FIGS. 11 to 17C)

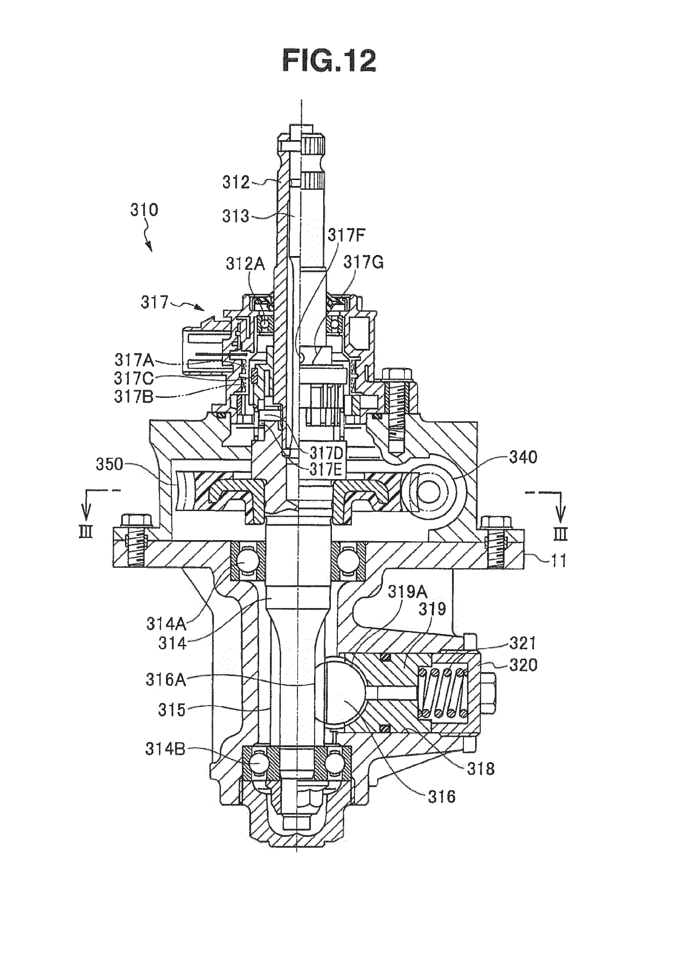

A motor-driven power steering apparatus 310 has a gear housing 311 which is fixed to a vehicle body frame or the like by a bracket (not shown), as shown in FIGS. 11 and 12. Further, a pinion shaft (a steering shaft) 314 is connected coaxially to a steering shaft 312 to which a steering wheel is connected, via a torsion bar 313. A pinion 315 is provided in the pinion shaft 314. A rack shaft 316 is provided with a rack 316A engaging with the pinion 315, and is supported to the gear housing 311 so as to be linearly movable right and left. A steering torque detecting apparatus 317 is provided between the steering shaft 312 and the pinion shaft 314. In this case, the steering shaft 312 and the pinion shaft 314 are supported to the gear housing 311 via bearings 312A, 314A and 314B.

The steering torque detecting apparatus 317 is provided, in the gear housing 311, with two detecting coils 317A and 317B which surround a cylindrical core 317C engaging with the steering shaft 312 and the pinion shaft 314, as shown in FIG. 12. The core 317C is provided with a vertical groove 317E which engages with a guide pin 317D of the pinion shaft 314 so as to be made movable only in an axial direction, and is provided with a spiral groove 317G which engages with a slider pin 317F of the steering shaft 312. In accordance with this, if a steering torque which a driver applies to a steering wheel is applied to the steering shaft 312, and a relative displacement in a rotating direction is generated between the steering shaft 312 and the pinion shaft 314, due to an elastic torsional deformation of the torsion bar 313, a displacement in the rotating direction of the steering shaft 312 and the pinion shaft 314 314 displaces the core 317C in an axial direction, so that an inductance of the detecting coils 317A and 317B caused by a magnetic change around the detecting coils 317A and 317B due to the displacement of the core 317C changes. In other words, if the core 317C moves to a side of the steering shaft 312, the inductance of the detecting coil 317A to which the core 317C comes close is increased, and the inductance of the detecting coil 317B from which the core 317C comes away is decreased, so that it is possible to detect the steering torque based on the change of the inductance.

A rack guide 319 is embedded in a cylinder portion 318 which is provided in a portion opposed to the pinion 315 while holding one end of the rack shaft 316 therebetween within the gear housing 311, as shown in FIG. 12. The rack guide 319 (a bush 319A) is snapped to a side of the rack shaft 16 by a spring 321 which is supported on its back face by a cap 320 attached to the cylinder portion 318, presses a rack 316A of the rack shaft 316 to the pinion 315, and slidably supports one end of the rack shaft 316. In this case, another end side of the rack shaft 316 is supported by a bearing 322. Further, left and right tie rods 323A and 323B are connected to an intermediate portion of the rack shaft 316 by connecting bolts 322A and 322B.

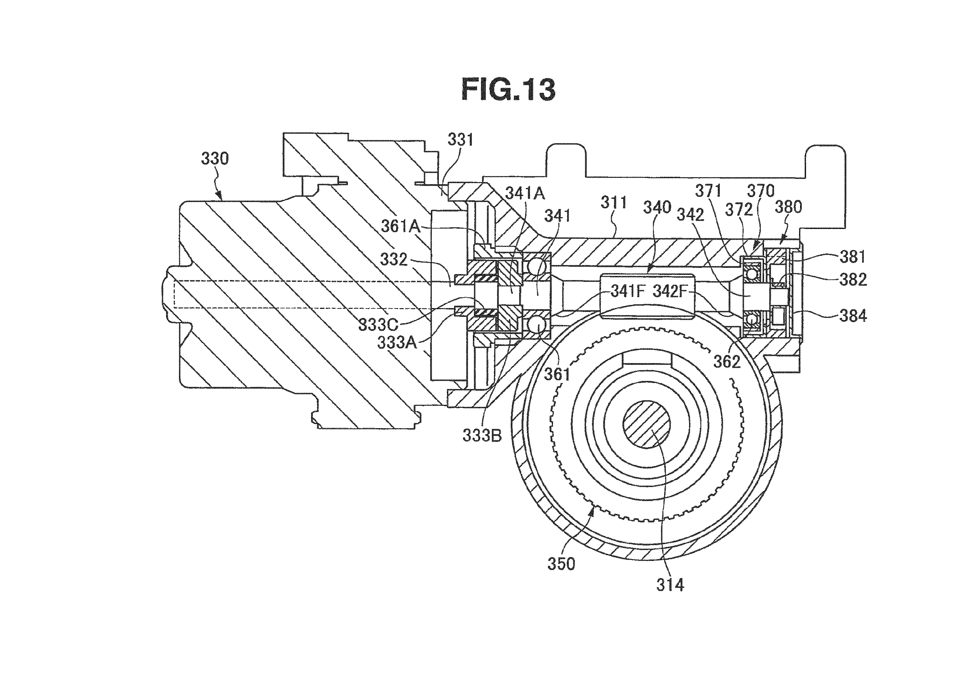

A motor case 331 of the electric motor 330 is attached to the gear housing 311, as shown in FIG. 13. A worm gear 340 serving as a drive gear is connected to a drive shaft 332 of the electric motor 330 via a coupling 333. The coupling 333 is constructed by a drive ring 333A which is connected by a spline to the drive shaft 332 of the electric motor 330. 330. A driven ring 333B is connected by a spline to a base end shaft 341 mentioned below of the worm gear 340, and a rubber ring 333C is interposed between the drive ring 333A and the driven ring 333B in their peripheral directions.

The worm gear 340 is supported on its both ends to the gear housing 311 by bearings 361 and 362 mentioned below. The worm gear 340 is engaged with a worm wheel 350 serving as a driven gear, and the worm wheel 350 is fixed to an intermediate portion of the pinion shaft 314 (the steering shaft). The electric motor 330 is driven based on a steering torque detected by the steering torque detecting apparatus 317. A generated torque of the electric motor 330 is applied as a steering assist torque to the rack shaft 316 via an engagement between the worm gear 340 and the worm wheel 350, and an engagement between the pinion 315 and the rack 316A, and assists a steering torque which a driver applies to the steering shaft 312.

Accordingly, the motor-driven power steering apparatus 310 supports the worm gear 340 with respect to the gear housing 311 as shown in FIG. 13, and removes or minimizes the backlash of the worm gear 340 and the worm wheel 350.

The base end shaft 341 which is provided in a protruding manner on a side of the electric motor 330 in the worm gear 340 is supported to a reference bearing 361 which is fixed to the gear housing 311. The reference bearing 361 consists ot for example, a ball bearing, and is structured such that an outer ring is fitted to a hole which is provided in the gear housing 311. One end surface of the outer ring comes into contact with and is supported to a step surface which is provided on one side of the hole, and another end surface of the outer ring is pressed and supported by a nut 361A which is threadably attached to another side of the hole. The base end shaft 341 of the worm gear 340 is inserted into an inner ring of the reference bearing 361. A flange portion 341F which is provided close to the worm gear 340 of the base end shaft 341 comes into contact with and is supported to one end surface of the inner ring. Another end surface of the inner ring is pressed and supported by an end surface of the driven ring 3338 of the coupling 333 which is connected close to the electric motor 330 of the base end shaft 341. The base end shaft 341 of the worm gear 340 may be fastened to the inner ring of the reference hearing 361 in accordance with press fitting or caulking. In accordance with this, the base end shaft 341 of the worm gear 340 is fixed to the inner ring of the reference bearing 361, and the leading end 341A of the reference shaft 341 is connected to the drive shaft 332 of the electric motor 330 via the coupling 333 mentioned above. A load in an axial direction which acts on the worm gear 340 is supported by the reference bearing 361.

In this case, the reference bearing 361 consists of an angular ball bearing, and slidably supports a center axis (the base end shaft 341 and a leading end shaft 342 mentioned below) of the worm gear 340 with respect to the gear housing 311.

A leading end shaft 342 (which is coaxial with the base end shaft 341) which is provided in a protruding manner in an opposite side to the electric motor 330 in the worm gear 340 is supported by a leading end bearing 362 embedded in a bearing support unit 370 provided in the gear housing 311. Further, the leading end bearing 362 of the leading end shaft 342 of the worm gear 340 is energized in a radial direction by an energizing means 380 which is provided in the gear horsing 311 in a state of being incidental to the bearing support unit 370, and a backlash of the worm gear 340 and the worm wheel 350 is removed or minimized.

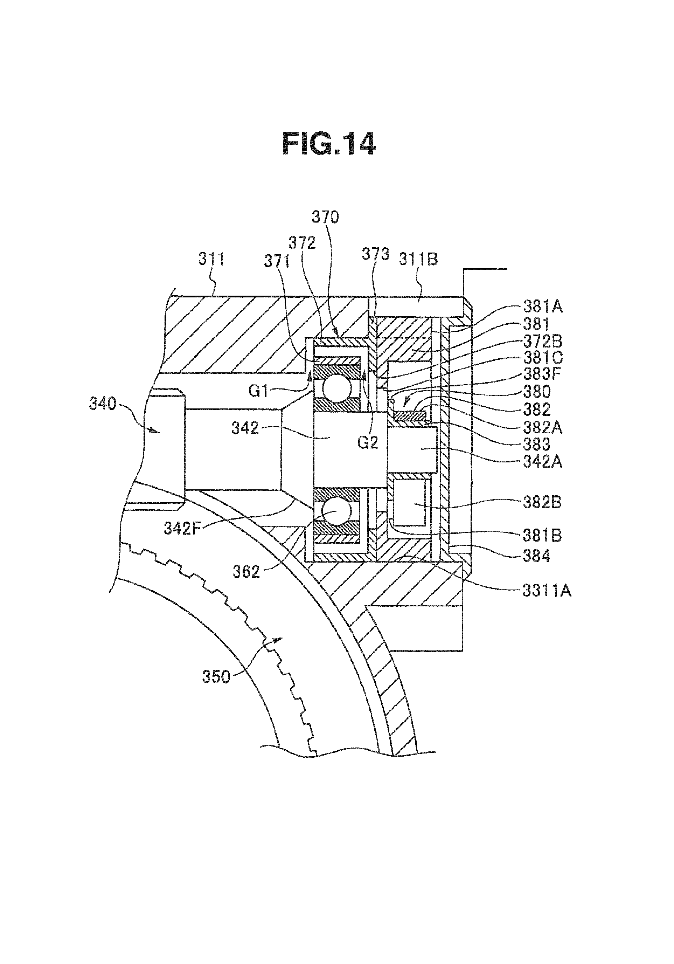

The bearing support unit 370 is structured, as shown in FIGS. 14, 16, and 17A to 17C, such that a guided surface 371A is provided in an outer periphery of a bearing case 371 which retains a leading end bearing 362 of the worm gear 340. The gear housing 311 is provided with a guide member 372 having a guide surface 372A with which the guided surface 371A of the bearing case 371 comes into slidable contact and which guides a motion of the bearing case 371 in an energizing direction by the energizing means 380 of the leading end bearing 362.

In the present embodiment, the bearing case 371 is formed as an annular molded body which is made of resin, is provided while charging the outer ring of the leading end beating 362 without any gap, and forms two flat surfaces which are formed as a circular outer shape, opposed to each other and in parallel to each other as the guided surface 371A.

The guide member 372 is formed as a separate body from the gear housing 311. It is fitted at its circular outer periphery to the bearing hole 311A without any gap so as to be fixedly attached, in a peripheral direction positioned state in which a protruding piece 373 protruding outward from one position of the of circular outer periphery of the annular frame body is locked and attached to a slit 311B which is notched at one position of the outer peripheral portion of the bearing hole 311A of the gear housing 311. The guide member 372 is provided with two flat guide surfaces 372A which are opposed to a rectangular inner periphery of the annular frame body and are in parallel to each other. The guide surfaces 372A on both sides bring the guided surface 371A of the bearing case 371 into slidable contact, and guide the leading end bearing 362 which the bearing case 371 retains in the energizing direction by the energizing means 380.

In this case, the leading end bearing 362 consists of, for example, a ball bearing. The leading end shaft 342 of the worm gear 340 is pressed into the inner ring of the leading end beating 362. A flange portion 342F which is provided close to the worm gear 340 of the leading end shaft 342 comes into contact with and is supported to one end surface of the inner ring.. A leaving end 342A of the leading end shaft 342 is protruded outward from the bearing case 371 to which the leading end bearing 362 is retained via a center window portion 372B of the frame body of the guide member 372 and a center window portion 381C of a spring case 381 mentioned below. The leading end bearing 362 and the bearing case 371 are provided with a gap G1 between an inner end (a contact surface against the flange portion 342F) close to the worm gear 340 and the gear bousing 311 (a far side step surface of the bearing hole 311A), in an axial direction of the leading end shaft 342, and are provided with a gap G2 between them and an outer end close to the spring case 381. In accordance with this, the worm gear 340 (the shafts 341 and 342) can carry out a circular arc motion while setting a motor side reference bearing 361 to a center of oscillation so as to oscillate, and can press the worm gear 340 to the worm wheel 350. In other words, the axial load acting on the worm gear 340 is supported only by the motor side reference bearing 361.

The energizing means 380 positions and immobilizes the spring case 381 via the center window portion 381C of the spring case 381 around the leading end 342A of the leading end shaft 342 of the worm gear 340 which is pivoted as mentioned above to the hearing hole 311A of the gear housing 311, as shown in FIGS. 14 to 17C. The spring case 381 consists of a cylinder body. It is fitted at an outer periphery of the cylinder portion to the bearing hole 311A without any gap so as to be fixedly attached, in a peripheral direction positioned state. In this peripheral direction positioned state, a positioning convex portion 381A protruding outward from one position of an outer periphery of the cylinder portion is locked and attached to the slit 311B mentioned above which is notched at one position of the outer peripheral portion of the bearing hole 311A of the gear housing 311.

The energizing means 380 is structured such that a ring portion 382A of a leaf spring 382 is wound around the leading end 342A of the leading end shaft 342 of the worm gear 340. A leg piece 382B extending outward in a radial direction from the ring portion 382A of the leaf spring 382 is attached to an attaching portion 381B which is provided in a rising manner in a perforated bottom portion provided in one end of the cylinder portion of the spring case 381 under a snapping pre-deformed state. The energizing means 380 is attached to the bearing hole 311A of the gear housing 311 in a preassembled body in which the leaf spring 382 is assembled in the spring case 381 as mentioned above.

In the present embodiment, the leaf spring 382 forms an Ω shape. In other words, the leaf spring 382 consists of the C-shaped ring portion 382A, and the C-shaped leg pieces 382B which are respectively connected to both ends of the ring portion 382A. Both end leg pieces 382B and 382B are locked and attached respectively to both side attaching portions 381B and 381B which are provided in a bottom portion of the spring case 381 so as to form a pair and are formed as a pin shape. The leaf spring 382 is structured so as to energize the leading end bearing 362 which is inserted into the leading end shaft 342 of the worm gear 340 in a radial direction (a direction in which the guide member 372 of the bearing support unit 370 mentioned above guides the bearing case 371), in such a manner as to apply a preload to the engaged portion between the worm gear 340 and the worm wheel 350, by a snapping force caused by an elastic restoring force of the leg piece 382B to which an elastic deformation of a previous deformation is applied, under this attached state.

At this time, the ring portion 382A of the leaf spring 382 is wound around a flanged bush 383 which is provided in an outer periphery of the leading end 342A of the leading end shaft 342 of the worm gear 340. The leading end 342A of the leading end shaft 342 is made smaller in diameter than a portion which is inserted into the bearing 362 of the leading end shaft 342, and the flange 383F of the bush 383 comes into contact with the step surface on the boundary of the portion which is inserted into the bearing 362 of the leading end shaft 342 and the leading end 342A.

The bearing support unit 370 which is provided in the bearing hole 311A of the gear housing 311, and the energizing means 380 are covered by a cap 384 which is attached to an opening of the bearing hole 311A with respect to an outer field.

In accordance with the present embodiment, the following operations and effects can be achieved.
(a) The spring case 381 is positioned and immobilized around the shaft end 342A of the worm gear 340 which is pivoted to the gear housing 311. The ring portion 382A of the leaf spring 382 constituting the energizing means 380 is wound around the shaft end 342A of the worm gear 340, and the leg piece 382B extending in the radial direction from the ring portion 382A of the leaf spring 382 is set to the snapping previously deformed state so as to be attached to the attaching portion 381B of the spring case 381. In accordance with this, the leaf spring 382 exerts the snapping force only in the radial direction of the ring portion 382A which is wound around the shaft end 342A of the worm gear 340, in other words, the radial direction of the worm gear 340. Accordingly, even if the engagement reaction force of the worm gear 340 and the worm wheel 350 exerts in the axial direction of the worm gear 340 in addition to the radial direction of the worm gear 340, the leaf spring 382 which always snaps the worm gear 340 only in the radial direction does not allow the motion in the axial direction of the worm gear 340. Accordingly, the worm gear 340 moves only in the radial direction, does not generate an engagement defect with the worm wheel 350, and can prevent an abnormal abrasion of the tooth of the worm gear 340 and the worm wheel 350, and an increase of friction, thereby preventing a tooth beating sound from being generated.
(b) The energizing means 380 is assembled in the gear housing 311 in the state of the preassembled body in which the leaf spring 382 is assembled in the spring case 381, and it is possible to improve an assembling property.
(c) The spring case 381 is provided with the positioning convex portion 381A in the outer periphery, and the positioning convex portion 381A is locked and attached to the slit 311B which is provided in the gear housing 311. It is possible to directly and correctly align the direction of the snapping force which the leaf spring 382 in the spring case 381 exerts, with the radial direction of the worm gear 340, by locking and attaching the positioning convex portion 381A of the spring case 381 to the slit 311B of the gear housing 311 so as to assemble based on a positional relationship between the positioning convex portion 381A which is provided in the spring case 381 and the attaching portion 381B for the leaf spring 382.
(d) The leaf spring 382 consists of the C-shaped ring portion 382A, and the C-shaped both end leg pieces 382B which are connected to both ends of the ring portion 382A. Both end leg pieces 382B are attached respectively to both side attaching portions 381B forming a pair of the spring case 381. In accordance with this, it is possible to improve a winding property around the shaft end 342A of the worm gear 340 of the leaf spring 382, and an attaching property to the spring case 381 of the leaf spring 382.

(e) The leaf spring 382 can exert the snapping force in the radial direction without applying any friction to the shaft end 342A of the worm gear 340, by winding the ring portion 382A of the leaf spring 382 around the bush 383 which is provided in the outer periphery of the shaft end 342A of the worm gear 340.
(f) The gear housing 311 is provided with the guide member 372 which has the bearing case 371 retaining the bearing 362 of the worm gear 340, has the guided surface 371A in the outer periphery of the bearing case 371, and is provided with the guide surface 372A coming into contact with the guided surface 371A of the bearing case 371 so as to guide the motion of the bearing case 371 in the energizing direction of the bearing 362. It is possible to correctly guide the bearing 362 of the worm gear 340 which is energized by the energizing means 380 in the radial direction corresponding to the energizing direction by the the guide member 372, and it is possible to prevent an engagement defect of the engaged portion between the worm gear 340 and the worm wheel 350 and a torque unevenness from being generated.

At this time, the guide surface 372A of the guide member 372 which guides the motion in the radial direction (the energizing direction of the energizing means 380) of the bearing case 371 retaining the bearing 362 of the worm gear 340 consists of the flat surface. The guided surface 371A of the bearing case 371 which comes into contact with the guide surface 372A also consists of the flat surface. Both the elements come into surface contact with each other, the the surface pressure thereof becomes smaller, and it is possible to avoid the deformation of the guide surface 372A and the guided surface 371A, and to stably maintain the guiding function.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention. For example, the guide member may consist of the gear housing itself.

In accordance with the present invention, there is provides a motor-driven power steering apparatus comprising: a drive gear driven by an electric motor, the drive gear being pivoted to a gear housing; a driven gear engaging with the drive gear so as to be connected to a steering shaft, the driven gear being pivoted to the gear housing; and an energizing means energizing a bearing of the drive gear in a radial direction in such a manner as to apply a preload to an engaged portion between the drive gear and the driven gear. A guided surface is provided in an outer periphery of a bearing case retaining the bearing of the drive gear, and the gear housing is provided with a guide member having a guide surface which comes into contact with the guided surface of the bearing case so as to guide a motion of the bearing case in an energizing direction of the bearing. Accordingly, in a motor-driven power steering apparatus, it is possible to stably guide the the motion of a bearing of a drive gear in a radial direction at a time of energizing the bearing in the radial direction so as to remove or minimize backlash between the drive gear and a driven gear.

Also, in accrdance with the present invention, there is provides a motor-driven power steering apparatus comprising a drive gear driven by an electric motor, the drive gear being pivoted to a gear housing. A driven gear engages with the drive gear so as to be connected to a steering shaft, the driven gear being pivoted to the gear housing. An energizing means energizes the drive gear in a radial direction in such a manner as to apply a preload to an engaged portion between the drive gear and the driven gear. The means is structured such that a spring case is positioned and immobilized around a shaft end of the drive gear which is pivoted to the gear housing. A ring portion of a leaf spring is wound around the shaft end of the drive gear, and a leg piece extending in a radial direction of the ring portion of the leaf spring is set to a snapping previously deformed state so as to be attached to an attaching portion of the spring case. Accordingly, in a motor-driven power steering apparatus, it is possible to make a a drive gear move only in a radial direction at a time of energizing the drive gear in the radial direction so as to remove or minimize backlash between the drive gear and a driven gear.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A motor-driven power steering apparatus comprising:
a drive gear driven by an electric motor, the drive gear being pivoted to a gear housing;
a driven gear engaging with the drive gear so as to be connected to a steering shaft, the driven gear being pivoted to the gear housing; and
an energizing means energizing the drive gear in a radial direction in such a manner as to apply a preload to an engaged portion between the drive gear and the driven gear,
wherein the energizing means is structured such that a spring case is positioned and immobilized around a shaft end of the drive gear which is pivoted to the gear housing, a ring portion of a leaf spring is wound around the shaft end of the drive gear, and a leg piece extending in a radial direction of the ring portion of the leaf spring is set to a snapping previously deformed state so as to be attached to an attaching portion of the spring case.

2. The motor-driven power steering apparatus according to claim 1, wherein the spring case is provided with a positioning convex portion in an outer periphery, and the positioning convex portion is capable of being locked and attached to a slit which is provided in the gear housing.

3. The motor-driven power steering apparatus according to claim 1 or 2, wherein the leaf spring consists of a C-shaped ring portion, and C-shaped both end leg pieces which are connected to both ends of the ring portion, and the both end leg pieces are attached respectively to both side attaching portions forming a pair in the spring case.

4. The motor-driven power steering apparatus according to any one of claims 1 to 3, wherein the ring portion of the leaf spring is wound around a bush which is provided in an outer periphery of the shaft end of the drive gear.

5. The motor-driven power steering apparatus according to any one of claims 1 to 4, wherein the gear housing is provided with a guide member which has a bearing case retaining a bearing of the drive gear, has a guided surface in an outer periphery of the bearing case, and is provided with a guide surface coming into contact with the guided surface of the bearing case so as to guide a motion of the bearing case in an energizing direction of the bearing.
